# EUROPÄISCHE PATENTANMELDUNG

(11) **EP 2 402 246 A1**
(43) Veröffentlichungstag der Anmeldung: **04.01.2012**
(21) Anmeldenummer: 10167680.7
(22) Anmeldetag: 29.06.2010
(51) Int. Cl.: B64C 11/06

(54) **Propellerblattlagerung**

(71) Anmelder: Brandenburgische Technische Universität Cottbus, 03046 Cottbus (DE)
(72) Erfinder: Führer, Matthias, 04720, Döbeln (DE); Führer, Christian, 03042, Cottbus (DE)
(74) Vertreter: Müller & Schubert

(57) **Zusammenfassung**

Die Erfindung betrifft eine Propellerblattlagerung (1), insbesondere für längsaxial verstellbare Propellerflügel, bei der an der Propellernabe (20) ein oder mehrere Propellerflügel in einer entsprechenden Anzahl von Lagertöpfen (10) einzeln festlegbar angeordnet sind, wobei die Festlegung der Propellerflügel mittels eines Bajonettverschlusses (A, B) erfolgt.

Durch die Bajonettverschlüsse ist eine schnelle, einfache Montage ohne Spezialwerkzeuge möglich.

## Beschreibung

Die vorliegende Erfindung betrifft eine Propellerblattlagerung mittels Bajonettverschluss.

Propeller sind gehäuselose Strömungsmaschinen, die mechanische Arbeit aufnehmen und diese in Form von Strömungsenergie an das sie umgebende Medium abgeben. Dieses Medium kann Luft, aber auch Wasser sein. Derartige Propeller werden in Luft- und Wasserfahrzeugen eingesetzt. Die Anwendung von Propellern ist aber auch bei Turbinen und Windrädern gebräuchlich, wobei allerdings Strömungsenergie aus dem umgebenden Medium aufgenommen und in mechanische Arbeit umgewandelt wird. Auch diese als Repeller bezeichneten Systeme werden im Sinne der Erfindung unter dem Begriff Propeller zusammengefasst.

Für einen optimalen Anstellwinkel können bei modernen Propellern die Blätter um ihre eigene Hochachse gedreht werden. Um dies zu realisieren, müssen die Blätter separat in die Nabe eingesetzt und rotierbar gelagert werden.

Eine derartige Lösung wird in der DE 10 2004 060 022 A1 offenbart. Hierbei wird ein Propellerblatt mittels zweier Wälzlager drehbar in einer Propellernabe angeordnet.

Bisherige Lösungen dieses Problems sind gerade bei größeren Propellerblättern meist zweiteilige Nabenkörper, die einen großen Montageaufwand nach sich ziehen. Bei kleineren Maschinen wird die Lagerung auch mit Hilfe von großen Gewinden eingeschraubt. Hier ist die Montage durch die vielen Gewindegänge ebenfalls aufwendig. Zudem sind Gewinde meist überdimensioniert und nehmen so mehr Platz als nötig ein. Gerade im Bereich der Hobbyfliegerei sollte die Montage einfach und ohne große Vorrichtungen möglich sein.

Der Erfindung liegt die Aufgabe zugrunde, eine Propellerblattlagerung zur Verfügung zu stellen, die schnell, einfach und ohne Spezialwerkzeuge montiert werden kann.

Die Aufgabe wird erfindungsgemäß durch eine Propellerblattlagerung gelöst, welche die Merkmale des Hauptanspruchs aufweist. Vorteilhafte Weiterbildungen der erfindungsgemäßen Propellerblattlagerung sind in den abhängigen Ansprüchen gekennzeichnet.

Die Aufgabe wird durch eine Propellerblattlagerung, insbesondere für längsaxial verstellbare Propellerflügel, gelöst, bei der an der Propellernabe ein oder mehrere Propellerflügel in einer entsprechenden Anzahl von Lagertöpfen einzeln festlegbar angeordnet sind, wobei die Festlegung der Propellerflügel mittels eines Bajonettverschlusses erfolgt.

Gegenstand der Erfindung ist eine Propellerblattlagerung, bestehend aus einem in der Propellernabe angeordneten Lagertopf zur Aufnahme einer entsprechenden Hülse, in welcher die Blattwurzel des Propellerflügels drehbar lagerbar und mittels eines Verschlussrings festlegbar angeordnet ist, wobei der Lagertopf und die Hülse und/oder die Blattwurzel und der Verschlussring entsprechend angeordnete Klauen aufweisen, wobei die jeweiligen Klauen mindestens einen Bajonettverschluss ausbilden.

Bevorzugt ist eine Propellerblattlagerung, bei welcher der Lagertopf und die Hülse entsprechend angeordnete Klauen aufweisen, wobei die Klauen einen Bajonettverschluss ausbilden.

Bevorzugt ist auch eine Propellerblattlagerung, wobei die Blattwurzel und der Verschlussring entsprechend angeordnete Klauen aufweisen, wobei die Klauen einen Bajonettverschluss ausbilden.

Bevorzugt ist ferner eine Propellerblattlagerung, bestehend aus einem in der Propellernabe angeordneten Lagertopf zur Aufnahme einer entsprechenden Hülse eines Bajonettverschlusses und einer auf der Blattwurzel des Propellerflügels formschlüssig angeordneten Hülse eines Bajonettverschlusses, wobei die Blattwurzel des Propellerflügels mit Klauen versehen und derart ausgebildet ist, dass diese Klauen mit einem Verschlussring eines weiteren Bajonettverschlusses verriegelbar sind.

Bevorzugt ist es, dass die Blattwurzel des Propellerflügels in einer im Inneren der Hülse angeordneten Buchse drehbar gelagert angeordnet ist. Es kann erfindungsgemäß vorgesehen sein, dass die Buchse selbstschmierend ausgestaltet ist. Die Lagerbuchse kann entfallen, wenn die Hülse an sich selbstschmierend ausgestaltet ist.

Es ist weiterhin bevorzugt, dass zwischen dem Verschlussring und der Propellernabe eine Gleitscheibe angeordnet ist. Es kann erfindungsgemäß vorgesehen sein, dass die Gleitscheibe selbstschmierend ausgestaltet ist.

Weiterhin ist bevorzugt, dass zwischen der Blattwurzel des Propellers und der Hülse ein Dichtelement angeordnet ist.

Besonders bevorzugt ist es, dass eine Verdrehsicherung in mindestens einer der Klauen an der Blattwurzel des Propellerflügels angeordnet ist, um das Öffnen des Bajonettverschlusses zu verhindern.

Ganz besonders bevorzugt ist es, dass die Blattwurzel der Propellerflügel in der Propellernabe drehbar angeordnet und mit einem Verstellmechanismus versehen ist, um den Anstellwinkel der Propellerflügel zu verändern.

Erfindungsgemäß bevorzugt ist dabei, dass die Verdrehsicherung gleichzeitig ein Teil des Verstellmechanismus ist.

Besonders bevorzugt ist es ferner, dass der aus Lagertopf und Hülse bestehende Bajonettverschluss mindestens zweireihig ausgestaltet ist. Es ist aber erfindungsgemäß auch vorgesehen, dass der Bajonettverschluss drei-, vier- oder mehrreihig ausgestaltet ist. Ferner ist es erfindungsgemäß vorgesehen, die Anzahl der jeweiligen Klauen zu verändern. Die grundlegende Konstruktion eines Bajonettverschlusses geht von mindestens zwei Klauen aus, welche einen Winkel von ca. 90° überstreichen und durch Verdrehen der beiden Bajonettbauteile um ca. 90° verriegelt werden. Es kann jedoch vorgesehen werden, drei, vier, fünf, sechs oder mehr Klauen anzuordnen. Dadurch wird der Verdrehwinkel entsprechend kleiner und zum Festlegen sind keine großen Wege erforderlich. Eine größere Anzahl von Klauen, insbesondere in Kombination mit einer mehrreihigen Anordnung, führt zu einer besseren Verteilung der Lasten, so dass auch größere Propellerflügel sicher in der Nabe befestigt werden können.

Ein weiterer Gegenstand der Erfindung ist die Verwendung eines Bajonettverschlusses zum Festlegen eines Propellerflügels in einer Propellernabe.

Die Aufgabe wird erfindungsgemäß im Wesentlichen durch eine Propellerblattlagerung mittels ein- und doppelreihigem Bajonettverschluss gelöst, die sich dadurch auszeichnet, dass die Kapselung der Blattwurzel zusammen mit der Lagerung einer Hülse als Baugruppe mittels zweireihigem Bajonettverschluss im Nabenkörper eingesetzt ist.

Die Erfindung stellt eine weitere Möglichkeit der Lagerung (komplette Gleitlagerung) sowie eine neuartige Fixierung (Bajonettverschluss) in einer ungeteilten Nabe dar.

Die Erfindung ist bei allen bekannten Propellersystemen anwendbar. Dabei können an einer Nabe beliebig viele Propellerblätter angebracht sein. Die Anzahl der Propellerblätter wird ausschließlich durch die Geometrie der Lagertöpfe bestimmt. Es ist daher möglich, Propeller mit einem, zwei, drei, vier, fünf, sechs und mehr Propellerblättern erfindungsgemäß zu realisieren. Daher ist die Verwendung von Bajonettverschlüssen allein durch die mechanischen Parameter begrenzt. Die erfindungsgemäße Propellerblattlagerung kann daher bei mit Propellern betriebenen Wasser- und Luftfahrzeugen angewendet werden. Auch ist die Verwendung in Turbinen und bei Windrädern zur Energieerzeugung erfindungsgemäß vorgesehen. Ein besonderer Vorteil ist es, dass auch die längsaxiale Verstellung der Propellerflügel ohne weiteres möglich ist.

Die Erfindung wird anhand der beigefügten Fig. 1 bis 6 näher erläutert.
Fig. 1 zeigt eine Explosionsdarstellung einer ersten Ausführungsform der Propellerblattlagerung in der Aufsicht auf die Propellernabe;
Fig. 2 zeigt eine Explosionsdarstellung einer zweiten Ausführungsform der Propellerblattlagerung in der Aufsicht auf die Propellernabe;
Fig. 3 zeigt eine Explosionsdarstellung einer dritten Ausführungsform der Propellerblattlagerung in der Aufsicht auf die Propellernabe;
Fig. 4a zeigt eine Explosionsdarstellung einer weiteren Ausführungsform der Propellerblattlagerung in der Aufsicht auf die Propellernabe;
Fig. 4b zeigt die um 180° gedrehte Ansicht der Fig. 4a;
Fig. 5 zeigt eine Aufsicht auf die Propellernabe der Fig. 4a, 4b; und
Fig. 6 zeigt einen Querschnitt durch die Propellernabe entlang der Linie A-A der Fig. 5.

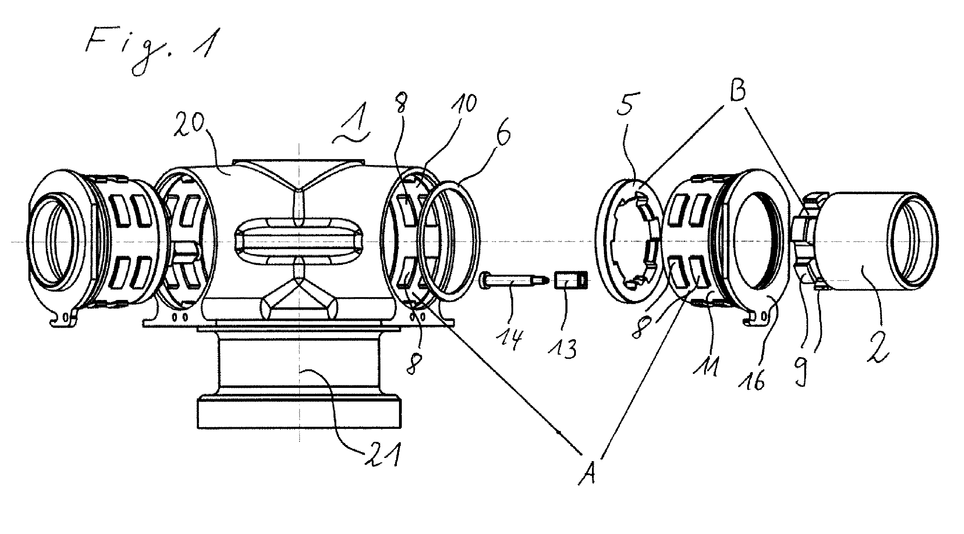

In den Figuren 1 bis 3 sind drei Ausführungsformen der erfindungsgemäßen Propellerblattlagerung gezeigt.

Figur 1 zeigt eine Propellerblattlagerung, bei welcher zwei Bajonettverschlüsse vorgesehen sind. Hierbei ist sowohl die Verbindung zwischen Lagertopf 10 und Hülse 11 als auch die Verbindung zwischen der Blattwurzel 2 des Propellerflügels und dem Verschlussring 5 als Bajonettverschluss A bzw. B ausgebildet.

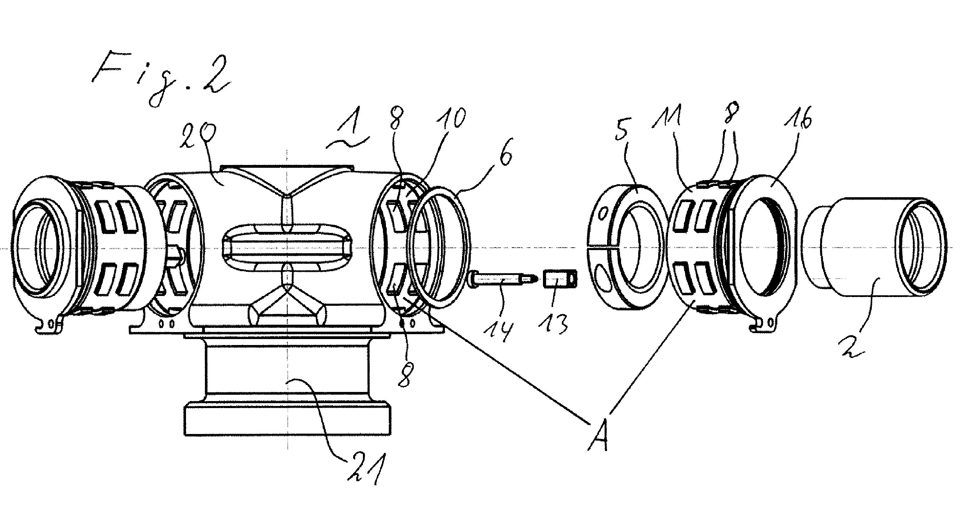

Figur 2 zeigt eine Ausführungsform, bei welcher die Hülse 11 in dem Lagertopf 10 mittels eines Bajonettverschlusses A festgelegt ist. Der Verschlussring 5 ist hierbei als Klemmring ausgebildet, welcher die Blattwurzel 2 des Propellerflügels umgreift und in der Hülse 11 gegen Herausrutschen sichert. Die Hülse kann andererseits mittels eines Flansches 16 an der Propellernabe befestigt werden.

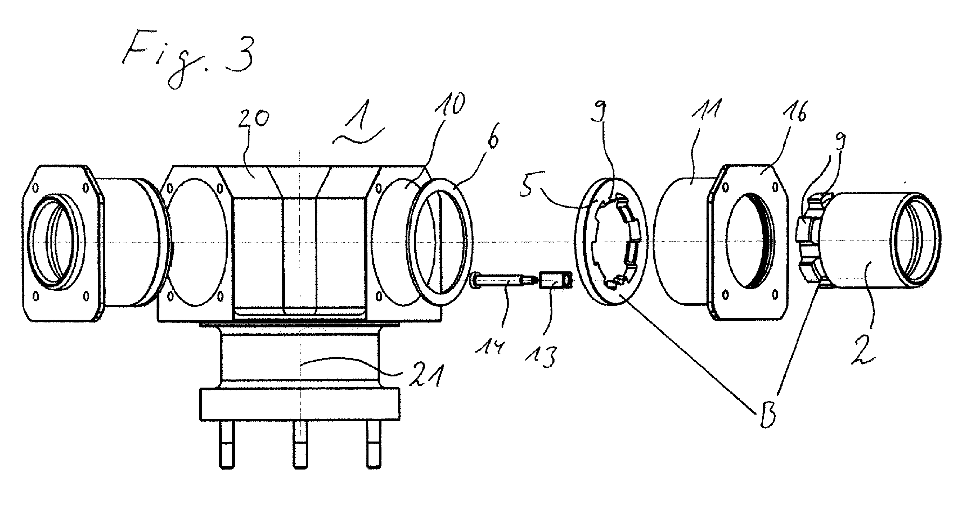

Die Figur 3 zeigt eine Ausführungsform, in welcher die Blattwurzel 2 des Propellerflügels mit Klauen 9 versehen ist, welche mittels der Klauen 9 im Verschlussring 5 den Propellerflügel in der Hülse 11 sichern und so den Bajonettverschluss B ausbilden. Die Hülse 11 ist mit einem Flansch 16 versehen, welcher an der Propellernabe 20 formschlüssig befestigbar ist.

In den Figuren 1 bis 3 sind ferner noch die Verdrehsicherung 13 und die Schraube 14 erkennbar. Die Verdrehsicherung 13 ist im Falle des Bajonettverschlusses B vorgesehen, damit die Blattwurzel 2 und der Verschlussring 5 gegen unbeabsichtigtes Verdrehen und dadurch Lösen der Verbindung gesichert sind. Die Verdrehsicherung wird mittels einer Schraube 14 in einer der Klauen 9 der Blattwurzel 2 festgelegt. Diese Schraube kann dann als Teil des Verstellmechanismus für den Anstellwinkel der Propellerflügel verwendet werden.

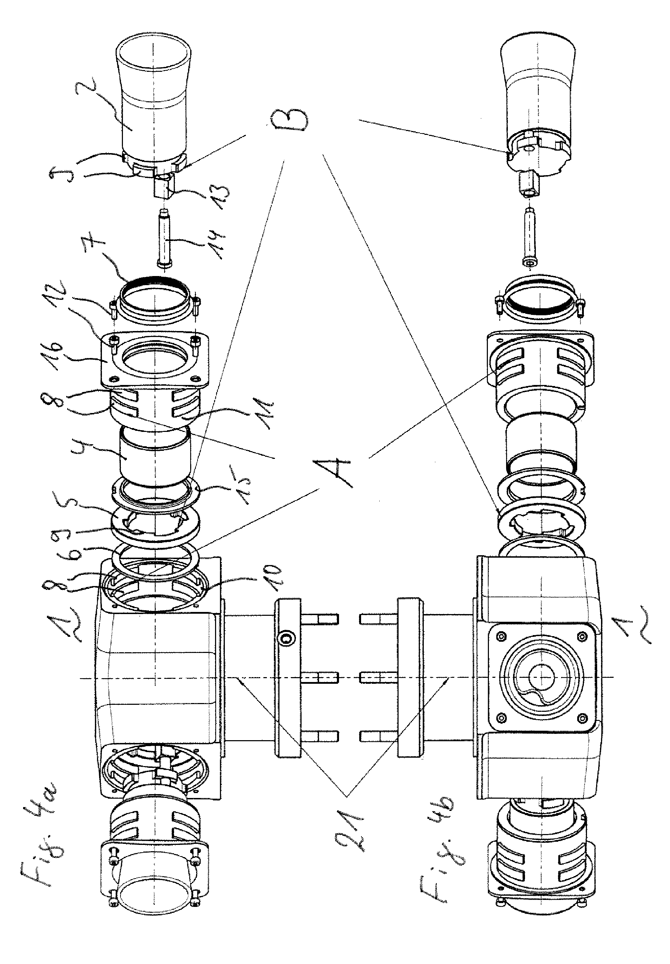

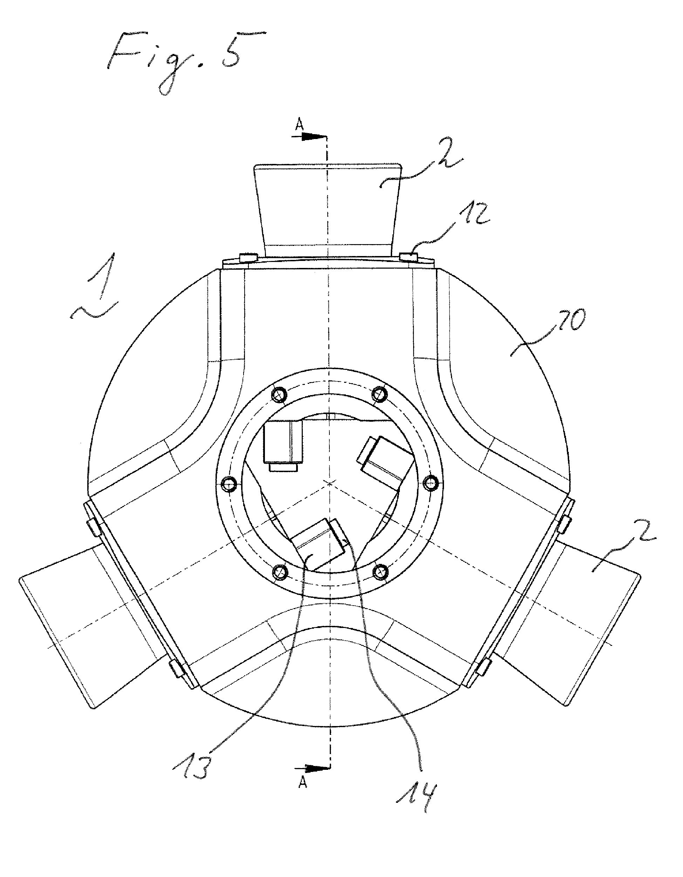

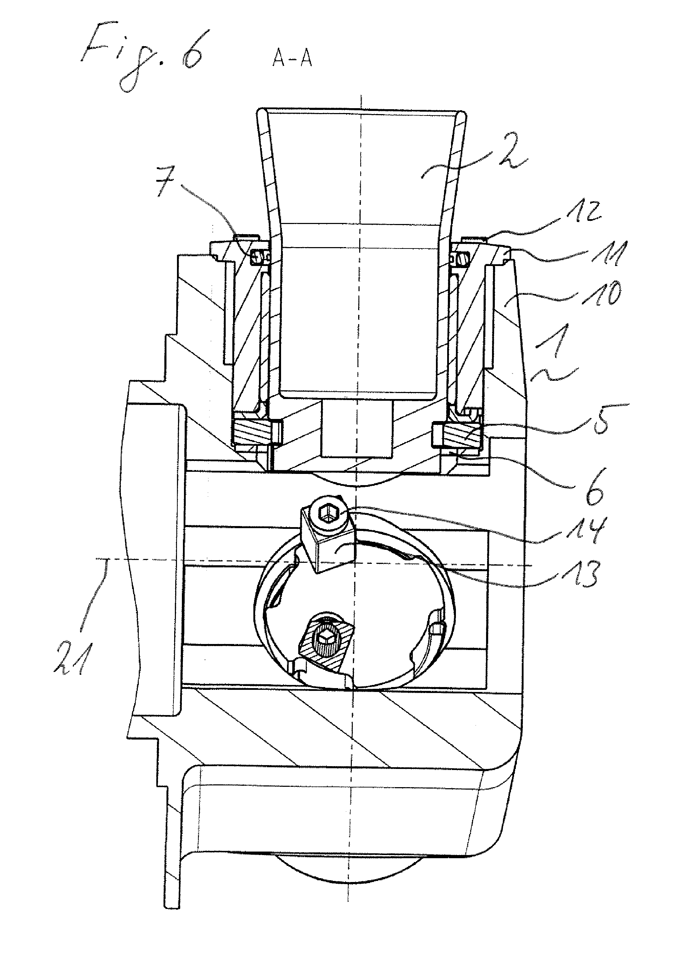

In den Figuren 4 bis 6 wird eine weitere Ausführungsform der erfindungsgemäßen Propellerblattlagerung dargestellt. Hierbei handelt es sich um eine Ausführungsform, in welcher zwei Bajonettverschlüsse in der Propellerblattlagerung ausgebildet sind. Die Ausführungsform ist eine besondere Ausgestaltung der Ausführungsform gemäß der Figur 1 und weist weitere bauliche Elemente auf. Diese zeigen die universelle Anwendbarkeit von Bajonettverschlüssen bei Propellerblattlagerungen.

Zur Montage der Propellerblattlagerung wird als Erstes eine Bundbuchse 4 als Gleitlager in die Hülse 11 eingebracht. Des Weiteren findet ein Rotationsdichtring 7 in einer Nut am vorderen Ende der Hülse 11 Platz. Danach wird die Hülse 11 von hinten auf die Blattwurzel 2 aufgeschoben. Um das Blatt in der Hülse 11 zu halten, wird am hinteren Ende der Blattwurzel 2 ein Verschlussring 5 mit einem einreihigen Bajonettverschluss befestigt. Eine Verdrehsicherung 13 in einer der Klauen 9 verhindert das

Öffnen des Verschlusses und ist gleichzeitig Teil des Verstellmechanismus. Die so entstandene Baugruppe kann nun komplett als Einheit in die Propellernabe 20 eingesetzt werden. Durch eine rechtsseitige Drehung der Hülse 11 bis zum Montageanschlag greifen die jeweils sechs Klauen 8 des zweireihigen Bajonettverschlusses zwischen dem Lagertopf 10 in der Nabe 20 und Hülse 11 ineinander. Der Verschluss wird anschließend mit zwei Verschraubungen 12 am Montageanschlag form- und kraftschlüssig gegen Öffnen gesichert.

Die so gestaltete Lagerung des Propellerblattes in der Nabe nimmt sämtliche Flieh- und Biegebelastungen im Betrieb auf, lässt aber gleichzeitig durch die Bundbuchse 4 und eine Gleitscheibe 6 zwischen Verschlussring 5 und Nabengehäuse 20 eine freie Rotation des Blattes um die eigene Hochachse zu.

Durch die Bajonettverschlüsse (Einfügen, Dichten, Sichern gegen Öffnen) ist eine schnelle, einfache Montage ohne Spezialwerkzeuge möglich. Ferner sorgt der Bajonettverschluss für gleichmäßig verteilte Einleitung der Lasten in den Nabenkörper.

Die Gleitlagerung ist platz- und gewichtssparend und wartungsfreundlich, dass bei geeigneter Wahl des Lagerwerkstoffes keine zusätzliche Schmierung notwendig ist (Selbstschmierung). Des Weiteren ist die Gleitlagerung konstruktiv einfacher zu gestalten als eine Wälzlagerung. Der Rotationsdichtring verhindert Wasser- und Schmutzeintrag und Schmiermittelaustritt.

### Bezugszeichenaufstellung

- 1: Propellerblattlagerung
- 2: Blattwurzel des Propellerflügels
- 4: Buchse
- 5: Verschlussring
- 6: Gleitscheibe
- 7: Dichtelement
- 8: Klauen
- 9: Klauen
- 10: Lagertopf
- 11: Hülse
- 12: Schraube
- 13: Verdrehsicherung
- 14: Schraube
- 15: Buchsenteil
- 16: Flansch
- 20: Propellernabe
- 21: Propellerdrehachse
- A: Bajonettverschluss
- B: Bajonettverschluss

## Patentansprüche

1. Propellerblattlagerung (1), insbesondere für längsaxial verstellbare Propellerflügel, bei der an der Propellernabe (20) ein oder mehrere Propellerflügel in einer entsprechenden Anzahl von Lagertöpfen (10) einzeln festlegbar angeordnet sind, wobei die Festlegung der Propellerflügel mittels eines Bajonettverschlusses (A, B) erfolgt.

2. Propellerblattlagerung (1) gemäß Anspruch 1, bestehend aus einem in der Propellernabe (20) angeordneten Lagertopf (10) zur Aufnahme einer entsprechenden Hülse (11), in welcher die Blattwurzel (2) des Propellerflügels drehbar lagerbar und mittels eines Verschlussrings (5) festlegbar angeordnet ist, wobei der Lagertopf (10) und die Hülse (11) und/oder die Blattwurzel (2) und der Verschlussring (5) entsprechend angeordnete Klauen (8, 9) aufweisen, wobei die jeweiligen Klauen (8, 9) mindestens einen Bajonettverschluss (A, B) ausbilden.

3. Propellerblattlagerung (1) gemäß Anspruch 1 oder 2, **dadurch gekennzeichnet, dass** der Lagertopf (10) und die Hülse (11) entsprechend angeordnete Klauen (8) aufweisen, wobei die Klauen (8) einen Bajonettverschluss (A) ausbilden.

4. Propellerblattlagerung (1) gemäß Anspruch 1 oder 2, **dadurch gekennzeichnet, dass** die Blattwurzel (2) und der Verschlussring (5) entsprechend angeordnete Klauen (9) aufweisen, wobei die Klauen (9) einen Bajonettverschluss (B) ausbilden.

5. Propellerblattlagerung (1) gemäß mindestens einem der voranstehenden Ansprüche, bestehend aus einem in der Propellernabe (20) angeordneten Lagertopf (10) zur Aufnahme einer entsprechenden Hülse (11) eines Bajonettverschlusses (A) und der auf der Blattwurzel (2) des Propellerflügels formschlüssig angeordneten Hülse (11) des Bajonettverschlusses (A), wobei die Blattwurzel (2) des Propellerflügels mit Klauen (9) versehen und derart ausgebildet ist, dass diese Klauen (9) mit einem Verschlussring (5) eines weiteren Bajonettverschlusses (B) verriegelbar sind.

6. Propellerblattlagerung (1) gemäß einem der voranstehenden Ansprüche, **dadurch gekennzeichnet, dass** die Blattwurzel (2) des Propellerflügels in einer im Inneren der Hülse (11) angeordneten Buchse (4) drehbar gelagert angeordnet ist.

7. Propellerblattlagerung (1) gemäß einem der voranstehenden Ansprüche, dass zwischen dem Verschlussring (5) und der Propellernabe (20) eine Gleitscheibe (6) angeordnet ist.

8. Propellerblattlagerung (1) gemäß einem der voranstehenden Ansprüche, dass zwischen der Blattwurzel (2) des Propellers und der Hülse (11) ein Dichtelement (7) angeordnet ist.

9. Propellerblattlagerung (1) gemäß einem der voranstehenden Ansprüche, dass eine Verdrehsicherung (13) in mindestens einer der Klauen (9) an der Blattwurzel (2) des Propellerflügels angeordnet ist, um das Öffnen des Bajonettverschlusses (B) zu verhindern.

10. Propellerblattlagerung (1) gemäß einem der voranstehenden Ansprüche, **dadurch gekennzeichnet, dass** die Blattwurzel (2) der Propellerflügel in der Propellernabe (20) drehbar angeordnet und mit einem Verstellmechanismus versehen ist, um den Anstellwinkel der Propellerflügel zu verändern.

11. Propellerblattlagerung (1) gemäß Anspruch 9, **dadurch gekennzeichnet, dass** die Verdrehsicherung (13) gleichzeitig ein Teil des Verstellmechanismus ist.

12. Propellerblattlagerung (1) gemäß einem der voranstehenden Ansprüche, **dadurch gekennzeichnet, dass** der aus Lagertopf (10) und Hülse (11) bestehende Bajonettverschluss (A) mindestens zweireihig ausgestaltet ist.

13. Verwendung eines Bajonettverschlusses zum Festlegen eines Propellerflügels in einer Propellernabe.
